# EUROPÄISCHE PATENTSCHRIFT

(11) **EP 2 225 100 B1**
(45) Veröffentlichungstag und Bekanntmachung des Hinweises auf die Patenterteilung: **18.06.2014**
(21) Anmeldenummer: 08861716.2
(22) Anmeldetag: 19.12.2008
(51) Int. Cl.: B32B 5/18, E04B 1/76, E04B 1/94, B29C 44/00, C09K 21/00

(54) **FORMTEILE AUS SCHÄUMFÄHIGEM REAKTIVHARZ ENTHALTENDEN TRÄGERMATERIALIEN**
MOLDED PARTS MADE OF CARRIER MATERIALS WHICH CONTAIN FOAMING REACTIVE RESIN
PIÈCES MOULÉES EN MATÉRIAUX DE SUPPORT CONTENANT UNE RÉSINE RÉACTIVE MOUSSABLE

(30) Priorität: 19.12.2007 EP 07150121
(43) Veröffentlichungstag der Anmeldung: 08.09.2010
(73) Patentinhaber: BASF SE, 67056 Ludwigshafen (DE)
(72) Erfinder: SCHERZER, Dietrich, 67433 Neustadt (DE); PRISSOK, Frank, 49448 Lemförde (DE); SCHÜTTE, Markus, 49080 Osnabrück (DE); ALTEHELD, Armin, 55543 Bad Kreuznach (DE); MERTES, Jürgen, 67067 Ludwigshafen (DE); HAHN, Klaus, 67281 Kirchheim (DE); QUADBECK-SEEGER, Hans-Jürgen, 67098 Bad Dürkheim (DE)
(86) Internationale Anmeldenummer: PCT/EP2008/068010
(87) Internationale Veröffentlichungsnummer: WO 2009/077616

(56) Entgegenhaltungen:
- EP-A2- 0 005 549
- DE-A1- 3 534 690
- DE-A1- 4 211 762
- US-A- 4 372 900

## Beschreibung

Die vorliegende Erfindung betrifft ein Formteil herstellbar aus schäumfähigem Reaktivharz enthaltenden Trägermaterialien gemäss Anspruch 1 die einem Druckverformungsschritt unterzogen werden, sowie ein Herstellungsverfahren für solche Formteile. Weiterhin betrifft die vorliegende Erfindung Paneelen enthaltend solche Formteile sowie die Verwendung dieser Formteile bzw. der Paneelen im Fahrzeugbau, inklusive Flugzeugbau, oder als Brandschutzschicht.

DE-A 196 40 887 betrifft ein flächiges Brandschutzmaterial mit mindestens einer Schicht I aus wasserhaltigem, faserverstärktem Natriumsilikat und mindestens einer Schicht II aus einem flexiblen offenzelligen Schaum, insbesondere aus einem Melamin/Formaldehyd-Harz. Bei der Herstellung des Brandschutzmaterials werden die Schichten I und II getrennt voneinander angeordnet, wobei das Brandschutzmaterial auch mehrere Schichten I und II in alternierender Anordnung enthalten kann. Das Brandschutzmaterial ist üblicherweise mit einem Epoxidharz-Bezug umhüllt und mit einer Schutzschicht, zum Beispiel mit einer Aluminiumfolie oder mit einer Folie aus Polyester, Polyethylen, Polyvinylchlorid oder Papier kaschiert. DE-A 196 40 887 offenbart jedoch nicht, dass schäumfähiges Reaktivharz in den flexiblen offenzelligen Schaum eingebracht und anschließend einem Druckverformungsschritt unterzogen wird.

In DE-A 42 11 762 werden schwer brennbare oder nicht brennbare Schaumstoffprofile zur brandschützenden Abdichtung von Bauöffnungen wie z.B. Fugen, Mauerdurchbrüchen oder Zwischenräumen zwischen Bauteilen offenbart. Das Schaumstoffprofil enthält in seinen Hohlräumen und/oder allseitig an seinen Oberflächen im Brandfall intumeszierende Dämmschichtbildner wie Blähgraphit, Silikate oder Polyurethane (PUs).

Als Schaumstoff wird beispielsweise ein Melaminharzschaum eingesetzt. Die Dämmschichtbildner können zusätzlich Polyvinylacetatdispersionen im Falle von stickstoffhaltigen Blähmitteln und Latexdispersionen im Falle von wässrigen Alkalisilikaten enthalten. Die Herstellung der Schaumstoffprofile erfolgt durch Imprägnieren und/oder allseitiges Beschichten der Schaumstoffe mit den intumeszierenden Dämmschichtbildnern. Die Imprägnierung kann beispielsweise durch Tauchen der Schaumstoffe in eine Lösung oder Dispersion des Dämmschichtbildners, bevorzugt mit Hilfe von Tauch-oder Quetschwalzen, anschließendem Abquetschen der überschüssigen Lösung oder Dispersion und nachfolgendem Trocknen durchgeführt werden. Durch Variation des Walzendrucks kann der Imprägnierungsgrad variiert werden. In DE-A 42 11 762 wird jedoch kein Druckverformungsschritt des schäumfähiges Reaktivharz enthaltenden Trägermaterials beschrieben. Durch dieses Verfahren werden nach dem Härtungsvorgang prinzipiell spröde und harte Materialien erhalten. Die darin beschriebenen Schaumstoffprofile eignen sich nicht als leichte Formteile zur Verwendung im Fahrzeugbau.

WO 2005/095728 betrifft einen Wärmedämmverbund umfassend zwei Metallplatten mit einem wärmedämmenden Kernmaterial, wobei zwischen dem wärmedämmenden Kernmaterial und mindestens einer der Metallplatten eine Brandschutzschicht mit einer intumeszierenden Masse eingebracht ist. Als Brandschutzschicht kann beispielsweise ein thermisch resistenter Melaminharzschaum (wie Basotect^{®}) oder ein Brandschutzlaminat aus gelierter Alkalisilikatlösung (wie Palusol^{®}) eingesetzt werden. Letztere werden auch als intumeszierende Massen bezeichnet, die zusätzlich Klebstoffe auf Basis von Polyurethan- oder Epoxidharzen sowie auf Dispersionsbasis, z.B. Acrylatdispersionen enthalten können. Weiterhin können der Brandschutzschicht, also dem Melaminharzschaum oder der intumeszierenden Masse, Additive wie Blähgraphit oder Melaminverbindungen zugesetzt werden. In WO 2005/095 728 wird jedoch nicht offenbart, dass die Klebstoffe auf Basis von Polyurethan oder Epoxidharzen in das Trägermaterial (Melaminharzschaum) eingebracht und anschließend einem Druckverformungsschritt unterzogen werden.

EP-A 0 672 524 betrifft ein Verfahren zur Herstellung von dimensionsstabilen Akustik-Bauteilen, bei dem Platten aus einem offenzelligen Duromer-Schaumstoff, beispielsweise ein Melamin/Formaldehyd-Harz, beidseitig mit dünnen, reißfesten Deckschichten kaschiert werden. Dabei wird ein Bindemittel als wässrige Suspension auf die Oberfläche der Schaumstoffplatten aufgebracht, darauf die Deckschicht aufgelegt und der Verbund bei Temperaturen zwischen 50 und 250°C und Drücken von 2 bis 200 bar verpresst. Als Bindemittel kommen härtbare Kondensationsharze wie Melamin-, Harnstoff- und Phenolharze in Frage, die als etwa 50 %ige wässrige Suspension eingesetzt werden.

In einer DE-Patentanmeldung der Anmelderin mit der Nummer 07 120 027.3 wird eine Schicht (A) offenbart, die mindestens ein Trägermaterial, mindestens eine Verbindung wie intumeszierende Massen oder silikathaltige Verbindungen sowie mindestens ein Polymer herstellbar aus mindestens einem vinylaromatischen Monomeren enthält. Diese Schicht kann auf einen Kern aufgebracht sein und eignet sich beispielsweise als Klebeschicht oder als Brennschutzschicht sowie zur Verbesserung des Flammwiderstandes in einem Sandwich-Paneel. Weiterhin kann diese Schicht in einem Wärmedämmverbund enthalten sein, der zusätzlich eine oder zwei Deckschichten umfasst. In dieser Schicht (A) können neben den vorgenannten Komponenten auch Klebstoffe auf Polyurethan- oder Epoxidbasis enthalten sein. In dieser Anmeldung wird jedoch nicht offenbart, dass die darin beschriebene Schicht einem Druckverformungsschritt unterzogen wird, dass es sich bei den Klebstoffen um schäumfähige Reaktivharze handelt und dass das Reaktivharz gegebenenfalls in Abwesenheit von Wasser in das Trägermaterial eingebracht wird.

Als so genannte Honeycombs aus Kunststoffen wie Polypropylen oder Polycarbonat oder aus Aramidfaser (Nomex-Papier) werden wabenförmige Materialien mit einer hohen mechanischen Festigkeit bei vergleichsweise geringem Gewicht bezeichnet, die insbesondere in der Luft- und Raumfahrtindustrie in Fahrzeugleitwerken oder Tragflächen eingesetzt werden (siehe Internet-Auszug von "Wikipedia" (www.de.wikipedia.org unter den Stichwörtern "Wabe", "Honeycomb" und "Aramid")). Als Aramide oder aromatische Polyamide (Polyaramide) werden langkettige synthetische Polyamide bezeichnet, bei denen gemäß einer Definition der U.S. Federal Trade Commission mindestens 85 % der Amidgruppen direkt an zwei aromatische Ringe gebunden sind. Aramidfasern werden unter den Markenbezeichnungen "Nomex" oder "Kevlar" kommerziell vertrieben.

Die der Erfindung zugrunde liegende Aufgabe besteht in der Bereitstellung neuer Formteile, die einerseits leicht, andererseits auch stabil sind und als Leichtbauteile im Fahrzeugbau, insbesondere bei Flugzeugen und Eisenbahnen, eingesetzt werden können. Gelöst wird diese Aufgabe durch ein Formteil herstellbar durch ein Verfahren gemäss Anspruch 1, umfassend die folgenden Schritte:
a) Einbringen eines schäumfähigen Reaktivharzes in ein Melaminharzschaum-Trägermaterial und
b) Druckverformung des das schäumfähige Reaktivharz enthaltenden Melaminharzschaum-Trägermaterials.

Ein Vorteil der vorliegenden Erfindung ist es, dass die Formteile automatisierbar herstellbar sind und über bessere mechanische Eigenschaften verfügen. So zeichnen sich die erfindungsgemäßen Formteile durch gute Biegefestigkeit und Zugfestigkeit sowie eine hohe und beständige Verformbarkeit aus. Weiterhin weisen sie eine geringe Dichte sowie ein leichtes Gewicht und eine geringe Brennbarkeit auf, so dass sie auch als Brandschutzschicht eingesetzt werden können. Von besonderem Vorteil sind Formteile, bei denen das schäumfähige Reaktivharz als Gradient im Trägermaterial verteilt ist. Dabei ist beispielsweise das Innere des Trägermaterials (Kern) möglichst leicht (enthält weniger schäumfähiges Reaktivharz), während der Rand des Trägermaterials im Vergleich zum Kern schwerer ist (enthält mehr schäumfähiges Reaktivharz). Alternativ kann auch ein Reaktivharzgradient eingestellt werden, wobei das Trägermaterial auf einer flächigen Seite kein oder nur sehr wenig schäumfähiges Reaktivharz und auf der gegenüberliegenden Seite des Trägermaterials eine sehr hohe Konzentration an schäumfähigem Reaktivharz enthält. Der besondere Vorteil der erfindungsgemäßen Formteile liegt darin begründet, dass sie durch das erfindungsgemäße Verfahren auf einfache Weise jede gewünschte Form annehmen können und diese Form gleichzeitig sehr beständig ist.

Nachfolgend werden die erfindungsgemäßen Formteile bzw. das Herstellungsverfahren der erfindungsgemäßen Formteile näher definiert. Bei den Formteilen handelt es sich vorzugsweise um flächige Formteile, also solche Formteile, bei denen die dritte Dimension (Dicke) kleiner ist als die erste (Länge) und zweite (Breite) Dimension. Sowohl die Formteile als auch das Herstellungsverfahren der Formteile sind Gegenstand der vorliegenden Erfindung. Die erfindungsgemäßen Formteile sind herstellbar durch ein Verfahren umfassend die folgenden Schritte:
a) Einbringen eines schäumfähigen Reaktivharzes in ein Trägermaterial
   In Schritt a) werden das schäumfähige Reaktivharz enthaltende Trägermaterialien hergestellt, die auch als Hybridschäume bezeichnet werden. Gegebenenfalls können auch zwei oder mehrere unterschiedliche schäumfähige Reaktivharze in das Trägermaterial eingebracht werden.
   Als Trägermaterial wird ein Melaminharzschaum verwendet. Trägermaterialien verfügen vorzugsweise über eine gute Saugfähigkeit. Sie können prinzipiell in beliebigen Formen oder Dicken angeordnet sein. Vorzugsweise ist das flächige Trägermaterial plattenförmig angeordnet, wobei die dritte Dimension (Dicke) kleiner ist als die erste (Länge) und zweite (Breite) Dimension des flächigen Trägermaterials. Die Länge und die Breite des flächigen Trägermaterials können gleich oder unterschiedlich sein. Die Dicke des Trägermaterials hängt in der Regel von der Art des verwendeten Materials ab und liegt normalerweise zwischen 0,1 und 50 mm, vorzugsweise zwischen 1 und 20 mm.
   Geeignete offenzellige Schäume sind Melaminharzschaum (gewerblich erhältlich beispielsweise unter der Bezeichnung Basotect®) Melaminharzschäume sowie deren Herstellungsverfahren werden beispielsweise in WO 01/94436 beschrieben.
   In einer Ausführungsform der vorliegenden Erfindung wird als Trägermaterial ein offenzelliger Schaum mit einer Dichte von ≤ 25 g/l und/oder einer Porengröße zwischen 10 µm und 1000 µm, vorzugsweise zwischen 50 µm und 300 µm verwendet.
   Als schäumfähiges Reaktivharz sind prinzipiell alle dem Fachmann bekannten Reaktivharze geeignet, die über schäumfähige Eigenschaften verfügen. Vorzugsweise ist das schäumfähige Reaktivharz ausgewählt aus mindestens einem (schäumfähigen) Polyurethanharz (PU-Harz), (schäumfähigen) Polyesterharz oder (schäumfähigen) Epoxidharz. Insbesondere ist das schäumfähige Reaktivharz ein Polyurethanharz. Geeignete Polyurethanharze, Polyesterharze oder Epoxidharze sind dem Fachmann bekannt. Solche Harze sind beispielsweise in Römpp online, Version 3.0 (Georg Thieme Verlag; 2007) offenbart unter den Stichwörtern (ungesättigte) Polyesterharze, Polyurethanharze, Polyurethane oder Epoxidharze.
   Unter Polyurethanharzen werden im Rahmen der vorliegenden Erfindung insbesondere Harze auf der Basis von Polyurethan verstanden. Sie werden überwiegend aus Lufttrocknenden Ölen (Triglyceride, ungesättigte Fettsäuren) gewonnen, die zunächst mit Glycerol zu einer Mischung aus Mono- und Diglyceriden umgeestert werden. Die resultierenden Produkte werden anschließend mit Diisocyanaten, bevorzugt Diisocyanatotoluolen, bei einem Stoffmengenverhältnis von Isocyanat- : Hydroxy-Gruppen ≤ 1 : 1 zu Polyurethanen umgesetzt, die keine Isocyanat-Gruppen mehr enthalten und ähnlich wie Alkydharze durch Luftoxidation trocknen und aushärten. Sie können alternativ hergestellt werden aus mit ungesättigten Säuren (z.B. mit Tallöl) partiell veresterten Polyalkoholen (Glycerol, Pentaerythritol) und Diisocyanaten.
   Unter Polyesterharzen werden im Rahmen der vorliegenden Erfindung vorzugsweise ungesättigte Polyesterharze verstanden. Insbesondere handelt es sich bei den Polyesterharzen um Reaktionsharze auf der Basis von ungesättigten Polyestern, hergestellt aus ungesättigten Dicarbonsäuren, wie Malein- oder Fumarsäure, und vorwiegend 2-wertigen Alkoholen, wie Ethylenglycol und Propan-1,2-diol, die bei der Anwendung unter Polymerisation und Vernetzung zu duroplastischen Massen aushärten. Bei ihrer Herstellung können als zusätzliche Komponenten copolymerisierbare Monomere (Styrol, α-Methylstyrol, Vinyltoluol, Methylmethacrylat und andere) als Lösemittel oder Verdünnungsmittel, bifunktionelle Monomere (z.B. Divinylbenzol, Diallylphthalat) als Vernetzer und Härter (Initiatoren der Polymerisation, z.B. Peroxide), Beschleuniger, Pigmente, Weichmacher, Antistatika, Füllstoffe und Verstärkungsstoffe (Fasern auf anorganischer oder organischer Basis) eingesetzt werden.
   Unter Epoxidharzen werden im Rahmen der vorliegenden Erfindung vorzugsweise sowohl oligomere Verbindungen mit mehr als einer Epoxid-Gruppe pro Molekül, die zur Herstellung von Duroplasten eingesetzt werden, als auch die entsprechenden Duorplasten selber verstanden. Die Umwandlung der Epoxidharze in Duroplaste erfolgt über Polyadditionsreaktionen mit geeigneten Härtern bzw. durch Polymerisation über die Epoxid-Gruppen. Vorzugsweise erfolgt die Herstellung von Epoxid-Harzen durch Umsetzung von Bisphenol A (aromatische Dihydroxy-Verbindungen) mit Epichlorhydrin im alkalischen Milieu zu kettenförmigen Verbindungen.
   Die im Rahmen der vorliegenden Erfindung eingesetzten schäumfähigen Reaktivharze zeigen in der Regel dann ihre Schäumwirkung, wenn sie in das Trägermaterial eingebracht werden, insbesondere nach mindestens einem Einwalzungsschritt. Die schäumfähigen Reaktivharze zeichnen sich dadurch aus, dass sie bei geringeren Temperaturen und/oder schneller aushärtbar sind als sonstige Harze. Vorzugsweise sind die schäumfähigen Reaktivharze bei einer Temperatur < 150°C, insbesondere < 100°C und/oder einer Zeitspanne ≤ 5 min, insbesondere ≤ 1 min aushärtbar. Härtbare Kondensationsharze wie sie beispielsweise in EP-A 0 672 524 offenbart sind, können nicht so schnell und/oder müssen bei höheren Temperaturen ausgehärtet werden.
   Die in EP-A 0 672 524 beschriebenen härtbaren Kondensationsharze, beispielsweise Melaminharze, Harnstoffharze und Phenolharze, die als Bindemittel eingesetzt werden, fallen nicht unter die Definition von schäumfähigen Reaktivharzen gemäß der vorliegenden Erfindung.
   Das Einbringen des schäumfähigen Reaktivharzes in das Trägermaterial kann nach allen dem Fachmann bekannten Methoden erfolgen, beispielsweise durch Tränken des Trägermaterials mit schäumfähigem Reaktivharz. Alternativ kann (die Oberfläche) das Trägermaterial auch mit schäumfähigem Reaktivharz besprüht werden. Normalerweise wird das schäumfähige Reaktivharz möglichst gleichmäßig aufgetragen, wobei die eingesetzte Menge an schäumfähigem Reaktivharz (Volumen in ml) in etwa in der 1-10-fachen Menge des Trägermaterials in Gramm entspricht. Das erfindungsgemäße Verfahren kann derart durchgeführt werden, dass das Trägermaterial vollständig in die Tränklösung enthaltend das schäumfähige Reaktivharz eingetaucht wird oder es wird nur eine flächige Seite des Trägermaterials eingetaucht. Gegebenenfalls kann die gegenüberliegende Seite des Trägermaterials anschließend ebenfalls in die gleiche oder eine andere Tränklösung eingetaucht werden. Mit dieser Methode können beispielsweise die nachstehend beschrieben Reaktivharz-Gradienten eingestellt werden. Gegebenenfalls können die Tränkschritte (Einbringen) wiederholt werden. Sinngemäßes gilt für das Besprühen oder sonstige Methoden des Einbringens des schäumfähigen Reaktivharzes in das Trägermaterial.
   In einer Ausführungsform der vorliegenden Erfindung wird das schäumfähige Reaktivharz, insbesondere Polyurethanharz, direkt vor der Durchführung von Schritt a) hergestellt. Dabei wird nach dem Fachmann bekannten Methoden das schäumfähige Reaktivharz durch Vermischen der (beiden) flüssigen Edukte hergestellt und bevorzugt ein Treibmittel zugegeben. Bei Verwendung eines Polyurethanharzes kann das Treibmittel auch Wasser sein. Direkt im Anschluss wird das schäumfähige Reaktivharz in das Trägermaterial eingebracht, beispielsweise durch Aufspritzen auf das Trägermaterial und gegebenenfalls anschließendem Einrollen oder Einwalzen in das Trägermaterial. Alternativ kann das schäumfähige Reaktivharz aus den jeweiligen Edukten erst im Trägermaterial hergestellt werden. In diese Ausführungsform werden also anstelle des fertigen Reaktionsharzes die Reaktivharzedukte in das Trägermaterial eingebracht.
   In einer Ausführungsform der vorliegenden Erfindung wird Schritt a) wird in Abwesenheit von Wasser durchgeführt. Unter Abwesenheit von Wasser wird im Rahmen der vorliegenden Erfindung verstanden, dass bezogen auf die eingesetzte Menge an schäumfähigem Reaktivharz maximal 2 Gew.-%, vorzugsweise maximal 0,5 Gew.-%, insbesondere maximal 0,1 Gew.-% Wasser in dem in Schritt a) erhaltenen Produkt enthalten sein können. Dieses Restwasser kann beispielsweise in den jeweiligen Edukten aufgrund deren Herstellungsverfahren enthalten sein. Vorzugsweise kann diese Ausführungsform angewendet werden, wenn das schäumfähige Reaktivharz aus mindestens einem Polyesterharz oder Expoxidharz ausgewählt ist.
   Vorzugsweise wird nach dem Einbringen (z.B. durch Tränken oder Besprühen) des schäumfähigen Reaktivharzes in das Trägermaterial ein oder mehrere Verformungsschritte durchgeführt, wobei durch Verwendung eines geeigneten Werkzeuges (beispielsweise einer Walze) das Reaktivharz in das Trägermaterial eingewalzt wird. Gegebenenfalls können diese Schritte mehrfach wiederholt werden, beispielsweise durch mehrfaches Tränken in abwechselnder Reihenfolge mit mehrfachen Walzschritten, beispielsweise auch mit unterschiedlicher Stärke und/oder Dauer. Durch das Walzen kann beispielsweise überschüssiges schäumfähiges Reaktionsharz wieder entfernt werden, bis die gewünschte Menge an schäumfähigem Reaktionsharz im Trägermaterial vorliegt. Vorzugsweise werden in Schritt a) Hybridschäume (Reaktivharz enthaltendes Trägermaterial) mit Rohdichten (RD) von 20 bis 400 g/l hergestellt. Gegebenenfalls können auch größere Rohdichten erzeugt werden.
   Die Eigenschaften des dabei hergestellten Hybridschaumes ergeben sich aus dem eingesetzten schäumfähigen Reaktivharz (beispielsweise Polyurethansystem) und der eingestellten Rohdichte.
   In einer bevorzugten Ausführungsform der vorliegenden Erfindung ist das schäumfähige Reaktivharz als Gradient im Trägermaterial enthalten. Dabei befindet sich im Inneren des Trägermaterials weniger schäumfähiges Reaktivharz als am Rand des (flächigen) Trägermaterials. Folglich ist das Innere des Trägermaterials (Kern) leichter als die Ränder des Trägermaterials. Solche Gradienten lassen sich beispielsweise durch mehrfache Wiederholung des Schrittes a) einstellen, insbesondere durch mehrfaches Tränken und gegebenenfalls mehrfaches Walzen. Alternativ kann auch ein Reaktivharzgradient eingestellt werden, wobei das Trägermaterial auf einer flächigen Seite kein oder nur sehr wenig schäumfähiges Reaktivharz und auf der gegenüberliegenden Seite des Trägermaterials eine sehr hohe Konzentration an schäumfähigen Reaktivharz enthält.
   Weiterhin kann der Hybridschaum zusätzlich Additive enthalten. Als Additive eignen sich beispielsweise Flammschutzmittel wie intumeszierende Massen, Alkalisilikate, Melamin, Melaminpolyphosphat, Melamincyanurat, Aluminiumhydroxid, Magnesiumhydroxid, Ammoniumpolyphosphate, organische Phosphate oder auch flammschützende Halogenverbindungen. Ebenso sind Weichmacher, Keimbildner, IR-Absorber wie Ruß und Graphit, Aluminiumoxidpulver oder Al(OH)₃, lösliche und unlösliche Farbstoffe, Biozid-wirksame Substanzen (wie Fungizide) und Pigmente als Additive geeignet.
   Gegebenenfalls kann der Hybridschaum auch mit weiteren organischen oder anorganischen Partikeln verstärkt werden. Solche Partikel werden am besten in Abmischung mit dem schäumfähigen Reaktivharz eingebracht. Geeignete verstärkende Füllstoffe sind beispielsweise: Kurzglasfasern, Talkum, Kreide oder andere Mineralien, Nanotubes, Schichtsilikate oder Kohlenstoff-Fasern.
b) Druckverformung des das schäumfähige Reaktivharz enthaltenden Trägermaterials (Hybridschaum)

Unter dem Begriff "Druckverformung" oder "Druckverformungsschritt" (Schritt b)) wird im Rahmen der vorliegenden Erfindung das Behandeln des das schäumfähige Reaktivharz enthaltenden Trägermaterials (Hybridschaum) bei erhöhtem Druck und erhöhter Temperatur verstanden. Dabei wird ein geeignetes, dem Fachmann bekanntes, vorzugsweise beheizbares Werkzeug verwendet, dessen Form die Formgebung des herzustellenden Formteils festlegt. Dabei können beispielsweise durch so genannte "Einleger" oder Werkzeuge mit speziell geformten Oberflächen Werkstücke (Formteile) mit unterschiedlichstem Aussehen und/oder Dicken hergestellt werden.

Unter erhöhtem Druck wird jeder Druck größer als der Atmosphärendruck (1 bar) verstanden. Schritt b) wird erfindungsgemäß normalerweise so durchgeführt, dass das in Schritt a) erhaltene Trägermaterial, dass das schäumfähige Reaktivharz enthält, in eine geeignete Form eingelegt wird, worauf Druck angelegt wird. In einer bevorzugten Ausführungsform der vorliegenden Erfindung wird der Druckverformungsschritt bei erhöhter Temperatur durchgeführt. In dieser bevorzugten Ausführungsform wird Schritt b) auch als "Thermoform-Schritt" bezeichnet. Dabei gilt prinzipiell, dass je höher die in Schritt b) eingesetzte Temperatur ist, umso geringer ist die Verweilzeit des das schäumfähige Reaktivharz enthaltenen Trägermaterials in der Form.

Vorzugsweise wird Schritt b) bei einer Temperatur von 50 bis 200°C und/oder einem Druck von 2 bis 200 bar durchgeführt. Je nach eingesetztem System kann das fertige Teil nach einigen Minuten, beispielsweise nach 0,5 bis 2 Minuten, entnommen werden. Gegebenenfalls kann der Druckverformungsschritt auch über einen längeren Zeitraum durchgeführt werden.

Die Materialeigenschaften der erhaltenen Formteile sind von dem Komprimierungsgrad, dem eingesetzten Trägermaterial, dem eingesetzten schäumfähigen Reaktivharz sowie dem Anteil des Reaktivharzes im Trägermaterial abhängig. Dabei können Teile mit einem nahezu unbegrenzten Spektrum an Eigenschaften hergestellt werden.

Durch den Druckverformungsschritt ist die Dicke des fertigen flächigen Formteiles normalerweise kleiner oder maximal gleich der Dicke des in Schritt a) eingesetzten Trägermaterials. Vorzugsweise hat das Formteil nach dem Druckverformen (Schritt b)) eine Dicke von ≤ 80 % im Vergleich zur Dicke des in Schritt a) eingesetzten Trägermaterials. In einer Ausführungsform der vorliegenden Erfindung kann die Dicke des fertigen Formteiles auf 10 bis 50 % der Dicke des in Schritt a) eingesetzten Trägermaterials reduziert werden.

Vor oder im Anschluss an Schritt b), vorzugsweise vor Schritt b) kann in einer Ausführungsform der vorliegenden Erfindung auf mindestens einer (flächigen) Seite des schäumfähigen Reaktivharz enthaltenden Trägermaterials eine Deckschicht aufgebracht werden. Sofern die Deckschicht vor Schritt b) aufgebracht wird, wird sie auf eine oder mehrere (flächigen) Seiten (Oberflächen) des das schäumfähigen Reaktivharz enthaltenden Trägermaterials (Hybridschaum) aufgebracht. Sofern die Deckschicht nach Schritt b) aufgebracht wird, wird sie auf eine Seite (Oberfläche) des fertigen Formteiles aufgebracht. Vorzugsweise wird auf den beiden gegenüberliegenden (flächigen) Seiten des das schäumfähigen Reaktivharz enthaltenden Trägermaterials jeweils eine Deckschicht aufgebracht. Dabei kann es sich sowohl um gleiche als auch um jeweils unterschiedliche Materialien handeln. Gegebenenfalls können auf mindestens eine oder auf zwei sich gegenüberliegenden Seiten des Hybridschaumes bzw. des fertigen Formteiles zwei oder mehr Deckschichten aufgebracht werden. Ein erfindungsgemäßes Formteil, das auf mindestens einer Seite (Oberfläche) des das schäumfähigen Reaktivharz enthaltenden Trägermaterials eine Deckschicht aufweist, wird als Paneele bezeichnet. Sofern sich jeweils eine Deckschicht an zwei sich gegenüberliegenden Seiten des das schäumfähigen Reaktivharz enthaltenden Trägermaterials befinden, spricht man von einer Sandwich-Paneele.

Als Deckschicht eignen sich prinzipiell alle dem Fachmann bekannten Deckschichten. Vorzugsweise besteht die Deckschicht vollständig oder zumindest teilweise aus Metall, insbesondere Aluminium, Holz, Isoliermaterial, Kunststoffen, beispielsweise als Kunststofffolien oder Kunststoffplatten, Wellblech, Metallblechen, Glasfasergewebe, Glasfasermatten, Gips oder Pressspanplatten. Sofern eine Deckschicht aus Holz verwendet wird, ist sie vorzugsweise aus Furnierholz, Deckschichten aus Kunststoff umfassen auch Polyurethan-Schäume. Mehr bevorzugt ist die Deckschicht aus Aluminium, Metallblechen, Glasfasergewebe, Kunststofffolien, Kunststoffplatten oder Furnierholz, besonders bevorzugt aus Aluminium. Vorzugsweise ist die Deckschicht eine Folie, Glasfasermatte oder beides.

Vorzugsweise wird die Deckschicht auf das das schäumfähige Reaktivharz enthaltenen Trägermaterial aufgebracht, nachdem dieses ausgewalzt wurde. Vorzugsweise ist die Schichtdicke der Deckschicht kleiner als die Dicke des Trägermaterials, vorzugsweise mindestens um den Faktor 10 kleiner. Geeignete Deckschichten sind beispielsweise eine 0,1 mm dicke Folie aus Aluminium. Vorzugsweise wird im nachfolgenden Schritt b) das mindestens eine Deckschicht umfassende Formteil auf ≤ 80 % der Ausgangsdicke des Trägermaterials komprimiert. Die Haftung zwischen Hybridschaum und Deckschicht resultiert normalerweise durch das bei der Komprimierung aus dem Schaum austretende schäumfähige Reaktivharz. In einer Ausführungsform der vorliegenden Erfindung wird nur auf eine flächige Seite des Trägermaterials in Schritt a) das schäumfähige Reaktivharz eingebracht (beispielsweise durch Tränken oder Besprühen). Auf diese Weise entsteht ein Gradient mit einer höheren Konzentration an schäumfähigem Reaktivharz auf der Seite (Oberfläche) des Trägermaterials, wo das Reaktivharz eingebracht wurde. Im Kern des Trägermaterials ist eine geringere Konzentration an Reaktivharz, während auf der gegenüberliegenden (flächigen) Seite des Trägermaterials kein schäumfähiges Reaktivharz enthalten ist. Auf diese Weise lassen sich auf einfache Weise Paneelen herstellen, die auf nur einer flächigen Seite des das Reaktivharz enthaltenden Trägermaterials mit einer Deckschicht, beispielsweise einer Glasfasermatte, Isoliermaterial, Holz, Metall oder Polyurethan-Schäumen versehen sind.

Ein weiterer Gegenstand der vorliegenden Erfindung ist eine Paneele enthaltend mindestens ein erfindungsgemäßes Formteil herstellbar durch ein Verfahren gemäß der vorstehenden Beschreibung. Im Rahmen der vorliegenden Erfindung werden unter dem Begriff "Paneele" insbesondere solche Gegenstände verstanden, die ein Formteil (Kern) aufweisen und auf dieses Formteil ist auf mindestens einer (flächigen) Seite eine Deckschicht aufgebracht. Paneelen können gerade (unverbogen) sein oder eine (oder gegebenenfalls mehrere) Krümmung aufweisen (gebogen). Weiterhin können Paneelen auch strukturiert sein. Vorzugsweise ist die Paneele eine Sandwich-Paneele, in der auf sich zwei sich gegenüberliegenden (flächigen) Seiten des Formteiles jeweils eine Deckschicht aufgebracht ist. Geeignete Deckschichten wurden vorstehend bereits aufgeführt. Gegebenenfalls können die beiden Deckschichten aus unterschiedlichen Materialien sein, vorzugsweise sind sie aus den gleichen Materialien. Insbesondere sind die beiden Deckschichten ausgewählt aus Aluminium, Metallblechen, Glasfasergeweben, Glasfasermatten, Kunststofffolien, Kunststoffplatten oder Furnierholz.

Ein weiterer Gegenstand der vorliegenden Erfindung ist ein Verfahren zur Herstellung solcher Paneele enthaltend mindestens ein erfindungsgemäßes Formteil. Das Verfahren zur Herstellung der Paneelen entspricht prinzipiell dem vorstehend beschriebenen Verfahren zur Herstellung der erfindungsgemäßen Formteile.

Beim Verformen und Aushärten der Formteile wird nicht nur eine kraftschlüssige Verbindung zwischen Deckschichten und Schaumstoffkern hergestellt, sondern die Deckschichten können auch gemeinsam mit dem Schaumkern verformt werden.

Ein weiterer Gegenstand der vorliegenden Erfindung ist die Verwendung der erfindungsgemäßen (flächigen) Formteile im Fahrzeugbau oder auch als Brandschutzschicht. Vorzugsweise werden die erfindungsgemäßen Formteile im Fahrzeugbau verwendet, insbesondere bei Flugzeugen oder Eisenbahnen. Der besondere Vorteil bei der Verwendung der erfindungsgemäßen Formteile im Fahrzeugbau ist darin begründet, dass sie aufgrund des Herstellungsverfahrens, insbesondere durch den Thermoform-Schritt b) auf einfache Weise zu beliebigen Formen verformt werden können. Diese Formen wiederum sind sehr beständig, verfügen über hervorragende mechanische Eigenschaft sowie eine geringe Brennbarkeit. Ein weiterer Gegenstand der vorliegenden Erfindung ist die Verwendung einer Paneele enthaltend ein erfindungsgemäßes Formteil im Fahrzeugbau, insbesondere bei Flugzeugen oder Eisenbahnen, oder als Brandschutzschicht.

Die vorliegende Erfindung soll anhand der nachfolgenden Beispiele verdeutlicht werden.

### Beispiele

### Beispiel 1

Eine ca. 10 mm dicke Platte Basotectschaum (Dichte: 10 g/l, Fläche 1 m²) wird beidseitig mit einem Polyurethanhartschaumsystem (Elastopor H), freie Dichte: 30 g/l, Startzeit: 30 sec, Steigzeit: 120 sec getränkt und das Polyurethanharz mittels eines Hand-rollers eingearbeitet.

### Edukt-Zusammensetzung von Elastopor H (Index 112)

| Polyol-Komponente: | | |
|---|---|---|
| Teile | Komponente | Beschreibung |
| 37,65 | Zuckerpolyol | hochfunktionelles Polyetherol auf Zuckerbasis, MW: 550, F = 4 |
| 23 | Zuckerpolyol | hochfunktionelles Polyetherol auf Zuckerbasis, MW: 500, F = 4,3 |
| 2 | Glycerin | Triol |
| 30 | Zweifunktionelles Polyetherol | Polyetherol auf Propylenglykolbasis, MW: 1000, F = 2 |
| 5,4 | Dreifunktioneles Polyetherol | Polyetherpolyol auf Propylenglycolbasis, MW: 1000, F = 3 |
| 1 | Schaumstabilisator | modifiziertes Polysiloxan |
| 4,445 | Treibmittelzusatz | Treibmittelzusatz |
| 0,6 | Katgemisch | Katgemisch |

| Isocyanat-Komponente: | | |
|---|---|---|
| 100 | Lupranat M 50 (Hersteller: BASF) | PMDI (Polymeres Methylendiphenylendiisocyanat) |

In der nachfolgenden Tabelle ist die eingearbeitete Menge an Polyurethanharz und die daraus resultierende Dichte des Hybridschaums aufgeführt.

| Polyurethanharz/Seite [g] | Polyurethan harzanteil in der Schaummatrix gesamt [g] | Volumen des Basotectschaums [liter] | Dichte des fertigen Hybridschaums [g/l] |
|---|---|---|---|
| 500 | 1000 | 10 | 110 |
| 250 | 500 | 10 | 65 |
| 150 | 300 | 10 | 39 |

Die so imprägnierten Platten werden in ein beheiztes Werkzeug (100°C, Höhe 8 mm) mit einem Einleger (Höhe 4 mm) eingebracht. Nach 2 Minuten Entformzeit erhält man eine abgestufte Platte der Stärke 8 und 4 mm mit hoher Steifigkeit und je nach eingearbeiteter Polyurethanharzmenge und Komprimierungsgrad zwischen 39 und 300 g/l variierender Rohdichte.

| Polyurethanharzanteil in der Schaummatrix [g/l] | Dichte des Hybridschaums [g/l] | Dichte des auf 8mm komprimierten Hybridschaums [g/l] | Dichte des auf 4 mm komprimierten Hybridschaums [g/l] |
|---|---|---|---|
| 100 | 110 | 140 | 280 |
| 50 | 65 | 80 | 160 |
| 30 | 39 | 50 | 100 |

Die Platte ist dimensionsstabil bis zu Temperaturen von 180°C und auch stabil gegen hydrolytische Belastung. Im Brandtest besteht die Platte die Brandklasse B2 (der reine Polyurethanschaum ist Brandklasse B3)

### Beispiel 2

In einem zweiten Versuch wird bei sonst gleicher Durchführung eine Glasfasermatte in die Form eingelegt. Es entsteht ein Formteil, auf dessen glatter Seite eine Glasfasermatte fest angebunden ist. Bei Beflammung an der Glasfaser-Deckschicht mit einem Bunsenbrenner kann das Teil nicht entzündet werden.

### Beispiel 3

Beispiel 3 wird sinngemäß zu Beispiel 1 durchgeführt. Dabei wird 1000 g eines Polyurethanschuhschaum-Systemes eingesetzt. Die dabei erhaltene abgestufte Platte weist jedoch ein Raumgewicht von 200 g/l auf und liefert im Brandtest ein analoges Ergebnis zu Beispiel 1.

### Edukt-Zusammensetzung des niederdichten PU-Schuhschaumsystemes (Index: 98)

| Polyol-Komponente: | | |
|---|---|---|
| Teile | Komponente | Beschreibung |
| 55,23 | Dreifunktionelles Polyetherol | Polyetherol, MW: 5000, F = 2,5 |
| 8,7 | MEG (Monoethylenglykol) | kurzkettiges Diol |
| 29,59 | Graftpolyol | Graftpolyol, 50% Feststoffgehalt |
| 2 | Katgemisch | Katgemisch |
| 1,1 | Treibmittel | Treibmittel |
| 3 | Harnstoff | Zusatz zur Härteerhöhung |

| Isocyanat-Komponente: | | |
|---|---|---|
| 100 | Iso 137/28 | Prepolymer auf MDI-Basis (Methylendiphenylendiisocyanat) |

### Beispiel 4

Beispiel 4 wird sinngemäß zu Beispiel 1 durchgeführt. Dabei wird 2000 g eines Polyurethanelastomer-Systemes eingesetzt. Die dabei erhaltene abgestufte Platte weist jedoch ein Raumgewicht von 400 g/l auf und liefert im Brandtest ein analoges Ergebnis zu Beispiel 1.

### Edukt-Zusammensetzung des PU-Elastomer - Systems (Index: 105)

| Polyol-Komponente: | | |
|---|---|---|
| Teile | Komponente | Beschreibung |
| 66,47 | Dreifunktionelles Polyetherol | Polyetherol, MW: 5000, F = 2,5 |
| 15 | Dreifunktionelles Polyetherol | Polyetherol MW: 200, F = 3 |
| 13 | DPG (Dipropylenglykol) | verzweigtes Diol |
| 5 | 1,4-Butandiol | Diol (Kettenverlängerer) |
| 0,5 | Schaumstabilisator | Stabilisator auf Silikonbasis |
| 0,015 | Lupragen N 201 | Aminkatalysator |
| Isocyanat-Komponente: | | |
| 100 | Lupranat M 20 | PMDI |

## Patentansprüche

1. Formteil herstellbar durch ein Verfahren umfassend die folgenden Schritte:
a) Einbringen eines schäumfähigen Reaktivharzes in ein Melaminharzschaum-Trägermaterial und
b) Druckverformung des das schäumfähige Reaktivharz enthaltenden Melaminharzschaum-Trägermaterials,
wobei die Druckverformung in Schritt b) bei erhöhtem Druck und erhöhter Temperatur durchgeführt wird.

2. Formteil nach Anspruch 1, **dadurch gekennzeichnet, dass** das schäumfähige Reaktivharz ausgewählt ist aus mindestens einem Polyurethanharz, Polyesterharz oder Epoxidharz.

3. Formteil nach Anspruch 1 oder 2, **dadurch gekennzeichnet, dass** vor der Durchführung von Schritt b) auf mindestens eine Seite des das schäumfähige Reaktivharz enthaltenden Trägermaterials eine Deckschicht aufgebracht wird.

4. Formteil nach einem der Ansprüche 1 bis 3, **dadurch gekennzeichnet, dass** das schäumfähige Reaktivharz enthaltende Trägermaterial eine Rohdichte von 20 bis 1000 g/l aufweist.

5. Formteil nach einem der Ansprüche 1 bis 4, **dadurch gekennzeichnet, dass** das schäumfähige Reaktivharz als Gradient im Trägermaterial verteilt ist.

6. Formteil nach einem der Ansprüche 1 bis 5, **dadurch gekennzeichnet, dass** Schritt b) bei einer Temperatur von 50 bis 200°C und/oder einem Druck von 2 bis 200 bar durchgeführt wird.

7. Formteil nach einem der Ansprüche 1 bis 6, **dadurch gekennzeichnet, dass** das Formteil nach der Druckverformung (Schritt b)) eine Dicke von ≤ 80 % im Vergleich zur Dicke des in Schritt a) eingesetzten Trägermaterial aufweist.

8. Formteil nach einem der Ansprüche 1 bis 7, **dadurch gekennzeichnet, dass** die Deckschicht aus Metall, insbesondere Aluminium, Holz, Isoliermaterial, Kunststoffen, Wellblech, Metaliblechen, Glasfasergewebe, Glasfasermatten, Gips oder Presspanplatten ist.

9. Verfahren zur Herstellung eines Formteils gemäß einem der Ansprüche 1 bis 8, umfassend die folgenden Schritte:
a) Einbringen eines schäumfähigen Reaktivharzes in ein Melaminharzschaum-Trägermaterial und
b) Druckverformung des das schäumfähige Reaktivharz enthaltenden Melaminharzschaum-Trägermaterials,
wobei die Druckverformung in Schritt b) bei erhöhtem Druck und erhöhter Temperatur durchgeführt wird.

10. Paneele enthaltend mindestens ein Formteil nach einem der Ansprüche 1 bis 8.

11. Paneele nach Anspruch 10, **dadurch gekennzeichnet, dass** die Paneele eine Sandwich-Paneele ist, in der auf zwei sich gegenüberliegenden Seiten des Formteils jeweils eine Deckschicht aufgebracht ist, wobei die beiden Deckschichten gegebenenfalls unterschiedliche Materialien sind.

12. Paneele nach Anspruch 11, **dadurch gekennzeichnet, dass** beide Deckschichten aus Aluminium, Metallblechen, Glasfasergeweben, Glasfasermatten, Kunststofffolien, Kunststoffplatten oder Furnierholz sind.

13. Verwendung eines Formteils gemäß einem der Ansprüche 1 bis 8 oder einer Paneele nach einem der Ansprüche 10 bis 12 im Fahrzeugbau, insbesondere bei Flugzeugen oder Eisenbahnen, oder als Brandschutzschicht.

## Claims

1. A molding producible by a process comprising the following steps:
a) introduction of a foamable reactive resin into a melamine resin foam support material and
b) compressive deformation of the melamine resin foam support material comprising the foamable reactive resin,
the compressive deformation in step b) being carried out at elevated pressure and elevated temperature.

2. The molding according to claim 1, wherein the foamable reactive resin is selected from at least one polyurethane resin, polyester resin or epoxy resin.

3. The molding according to claim 1 or 2, wherein an outer layer is applied to at least one side of the support material comprising the foamable reactive resin before step b) is carried out.

4. The molding according to any one of claims 1 to 3, wherein the support material comprising foamable reactive resin has an overall density of 20 to 1000 g/l.

5. The molding according to any one of claims 1 to 4, wherein the foamable reactive resin is distributed in the form of a gradient in the support material.

6. The molding according to any one of claims 1 to 5, wherein step b) is carried out at a temperature of 50 to 200°C and/or a pressure of 2 to 200 bar.

7. The molding according to any one of claims 1 to 6, wherein the molding after compressive deformation (step b)) has a thickness of ≤ 80% in comparison to the thickness of the support material used in step a).

8. The molding according to any one of claims 1 to 7, wherein the outer layer is of metal, more particularly aluminum, wood, insulating material, plastics, corrugated metal sheet, other metal sheets, glass fiber wovens, glass fiber mats, plaster or chipboard.

9. A process for producing a molding according to any one of claims 1 to 8, comprising the following steps:
a) introduction of a foamable reactive resin into a melamine resin foam support material and
b) compressive deformation of the melamine resin foam support material comprising the foamable reactive resin,
the compressive deformation in step b) being carried out at elevated pressure and elevated temperature.

10. A panel comprising at least one molding according to any one of claims 1 to 8.

11. The panel according to claim 10, which is a sandwich panel in which an outer layer is applied on each of two opposing sides of the molding, the two outer layers being, optionally, different materials.

12. The panel according to claim 11, wherein both outer layers are of aluminum, metal sheets, glass fiber wovens, glass fiber mats, polymeric films, polymeric boards or wood veneer.

13. The use of a molding according to any one of claims 1 to 8 or of a panel according to any one of claims 10 to 12 in vehicle construction, more particularly in aircraft or railroad applications, or as a fire protection layer.

## Revendications

1. Pièce moulée pouvant être produite par un procédé comprenant les étapes suivantes :
a) introduction d'une résine réactive expansible dans un matériau de support-mousse de résine mélamine et
b) déformation par compression du matériau de support-mousse de résine mélamine contenant une résine réactive expansible,
la déformation par compression dans l'étape b) étant effectuée sous pression élevée et à température élevée.

2. Pièce moulée selon la revendication 1, **caractérisée en ce que** la résine réactive expansible est choisie parmi au moins une résine polyuréthane, une résine polyester ou une résine époxy.

3. Pièce moulée selon la revendication 1 ou 2, **caractérisée en ce qu'**avant l'exécution de l'étape b) on applique une couche de recouvrement sur au moins un côté du matériau de support contenant la résine réactive expansible.

4. Pièce moulée selon l'une quelconque des revendications 1 à 3, **caractérisée en ce que** le matériau de support contenant la résine réactive expansible présente une densité apparente de 20 à 1 000 g/l.

5. Pièce moulée selon l'une quelconque des revendications 1 à 4, **caractérisée en ce que** la résine réactive expansible est répartie en gradient dans le matériau de support.

6. Pièce moulée selon l'une quelconque des revendications 1 à 5, **caractérisée en ce que** l'étape b) est effectuée à une température de 50 à 200 °C et/ou sous une pression de 2 à 200 bars.

7. Pièce moulée selon l'une quelconque des revendications 1 à 6, **caractérisée en ce qu'**après la déformation par compression (étape b)) la pièce moulée présente une épaisseur de ≤ 80 % par comparaison avec l'épaisseur du matériau de support utilisé dans l'étape a).

8. Pièce moulée selon l'une quelconque des revendications 1 à 7, **caractérisée en ce que** la couche de recouvrement est à base de métal, aluminium en particulier, bois, matériau isolant, matières plastiques, tôle ondulée, tôles métalliques, tissus de fibres de verre, mats en fibres de verre, plâtre ou plaques d'aggloméré.

9. Procédé pour la production d'une pièce moulée selon l'une quelconque des revendications 1 à 8, comprenant les étapes suivantes :
a) introduction d'une résine réactive expansible dans un matériau de support-mousse de résine mélamine et
b) déformation par compression du matériau de support-mousse de résine mélamine contenant une résine réactive expansible,
la déformation par compression dans l'étape b) étant effectuée sous une pression élevée et à une température élevée.

10. Panneau contenant au moins une pièce moulée selon l'une quelconque des revendications 1 à 8.

11. Panneau selon la revendication 10, **caractérisé en ce que** le panneau est un panneau-sandwich, dans lequel une couche de recouvrement est appliquée sur chacun des deux côtés opposées de la pièce moulée, les deux couches de recouvrement étant éventuellement en des matériaux différents.

12. Panneau selon la revendication 11, **caractérisé en ce que** les deux couches de recouvrement sont en aluminium, tôles métalliques, tissus de fibres de verre, mats en fibres de verre, films de matière plastique plaques de matière plastique ou bois de plaquage.

13. Utilisation d'une pièce moulée selon l'une quelconque des revendications 1 à 8 ou d'un panneau selon l'une quelconque des revendications 10 à 12 dans la construction de véhicules, en particulier dans des aéronefs ou des trains, ou en tant que couche coupe-feu.
